(19) **Europäisches Patentamt European Patent Office Office européen des brevets**

(11) **EP 4 736 976 A1**

(12) **EUROPEAN PATENT APPLICATION**

(43) Date of publication:
06.05.2026 Bulletin 2026/19

(21) Application number: 25199318.4

(22) Date of filing: 01.09.2025

(51) International Patent Classification (IPC):
*B01D 9/00* (2006.01)    *B01D 9/02* (2006.01)
*G01N 15/02* (2024.01)    *G01N 15/06* (2024.01)

(52) Cooperative Patent Classification (CPC):
**B01D 9/0063; B01D 9/02; G01N 15/0211;**
G01N 15/075; G01N 2015/0053; G01N 2015/0222

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.10.2024 JP 2024191596**

(71) Applicant: **Tsukishima Kikai Co., Ltd.**
**Tokyo 104-0053 (JP)**

(72) Inventor: **YAIRO, Makoto**
**Tokyo, 104-0053 (JP)**

(74) Representative: **Müller-Boré & Partner**
**Patentanwälte PartG mbB**
**Friedenheimer Brücke 21**
**80639 München (DE)**

(54) **METHOD FOR OBTAINING REPRESENTATIVE PARTICLE SIZE USING TURBIDITY METER IN CRYSTALLIZER AND REPRESENTATIVE PARTICLE SIZE ACQUISITION SYSTEM**

(57)     From basic data of a representative particle size of produced particles acquired by a particle size distribution measuring apparatus, a turbidity of a dispersion of the produced particles, a concentration of the produced particles in the dispersion of the produced particles, and supply amounts of metals derived from metal salts, a correlation equation of these variables is created in advance. In a crystallization step, the representative particle size of the produced particles is acquired using the correlation equation from the turbidity obtained by measuring the dispersion of the produced particles, the concentration of the produced particles, and the supply amount of the metals derived from the metal salts.

## FIG. 1

## Description

Technical Field

The present invention relates to a method for acquiring the representative particle size of a crystallization substance produced during crystallization, and a representative particle size acquisition system.

Background Art

There is a crystallization operation as an operation of precipitating crystals from a liquid phase or the like. Crystallization occurs in a supersaturated state, which can be obtained by cooling, evaporation, reaction, or pressurization. For example, a case where produced particles are produced by the supersaturated state provided by the reaction is called reactive crystallization.

In a normal crystallization operation, it is necessary to manufacture crystals having a predetermined representative particle size and particle size distribution. Examples of the applications of crystallization include the manufactures of a precursor of a positive electrode material for a lithium ion battery, various inorganic materials, a cosmetic material, and the like, and in these applications, the representative particle size and the particle size distribution are important physical property values in order for a material obtained by the crystallization to exhibit performance. Therefore, it is important to acquire information on the particle sizes of the produced particles in order to secure the performance thereof.

Examples of a method for measuring the particle sizes of particles in the order of microns and submicrons include a dynamic light scattering method, a laser diffraction method/scattering method, a centrifugal sedimentation method, and an image analysis method, but all measuring instruments for the methods are expensive or require time for measurement.

Meanwhile, a method that enables efficient particle size measurement at low cost has been proposed (Patent Literature 1). The disclosed method includes the steps of: mixing a predetermined amount of a suspended substance having a known average particle size with water for each average particle size to create a suspension for each average particle size; measuring the turbidity of the suspension for each average particle size to specify a correspondence relationship between the average particle size and the turbidity; and measuring the turbidity of a target suspension containing the suspended substance to be measured for particle size, and collating the measured turbidity with the correspondence relationship to specify the average particle size of the suspended substance contained in the target suspension.

Specifically, a graph of the turbidity and the particle size is created for each amount (concentration) of the suspended substance, and the turbidity of the target suspension is collated with the turbidity-average particle size relationship graph. Here, the graph is created for each concentration of the suspension, and it is necessary to adjust the concentration of the target suspension to the concentration of the suspended substance in the graph created above.

Patent Literature 1 discloses that a graph is created for each color and concentration of suspended substances that are kaolin (white), slate (gray), and basic volcanic rocks (brown), and the turbidity of the target suspension is collated with a graph of a corresponding color in the turbidity-average particle size relationship graph to specify the average particle size of the suspended substance contained in the target suspension having a color tone of any of white, gray, and brown. Also in this case, it is necessary to adjust the concentration of the target suspension to the concentration of the suspended substance in the graph created above. Furthermore, it is necessary to select the turbidity-average particle size relationship graph for each color of the suspended substance.

Citation List

Patent Literature

Patent Literature 1: JP 2008-191057 A

Summary of Invention

Technical Problem

The prior art utilizes the turbidity-average particle size relationship graph created for each concentration of the suspended substance or the turbidity-average particle size relationship graph created for each concentration of the suspended substance and for each of three colors.

Therefore, it is necessary to adjust the concentration of the target suspension to the concentration of the suspended substance in the created graph, and when the suspended substance is colored, it is necessary to use the turbidity-average particle size relationship graph of the color, and it is difficult to apply the same method in a concentration crystallization process in which the average particle size varies depending on the turbidity of the suspension, the concentration of a slurry, and the supply amount of a raw material substance.

An object of the present invention is to provide a method for acquiring the particle sizes of produced particles in a crystallizer using one correlation equation from the turbidity, the concentration of the produced particles, the supply amount of the raw material substance, and the like in a crystallization process. Another object of the present invention is to provide a method for acquiring the particle sizes of the produced particles in the crystallizer from the turbidity, the concentration of the produced particles, and the supply amount of the raw material substance using one correlation equation when the produced particles are produced by the reaction of the raw material substance.

Solution to Problem

Aspects of means for solving the above problem are as follows.

(First Aspect)

A method for obtaining a representative particle size of produced particles in a crystallizer, characterized in that

the representative particle size of the produced particles is obtained in a crystallization step of supplying aqueous solutions each containing each of a plurality of kinds of metal salts to the crystallizer and bringing the metal salts into contact with each other to produce the particles, and
the method comprises the steps of:

acquiring basic data of the representative particle size of the produced particles acquired by a particle size distribution measuring apparatus, a turbidity of a dispersion of the produced particles, a concentration of the produced particles in the dispersion of the produced particles, and supply amounts of metals derived from the metal salts;
creating a correlation equation representing a relationship among the representative particle size of the produced particles, the turbidity of the dispersion of the produced particles, the concentration of the produced particles in the dispersion of the produced particles, and the supply amounts of one or two or more kinds of the metals selected from the metals, obtained in the step of acquiring the basic data;
acquiring the turbidity of the dispersion of the produced particles, the concentration of the produced particles, and the supply amounts of the metals derived from the plurality of kinds of metal salts in the crystallization step; and
acquiring the representative particle size of the produced particles by the correlation equation based on respective numerical values of the turbidity of the dispersion of the produced particles obtained in the crystallization step, the concentration of the produced particles, and the supply amounts of one or two or more of the metals selected from the metals derived from the metal salts.

(Operation and Effect)

According to the present method, it is possible to easily and quickly obtain the representative particle size of the produced particles from the turbidity meter response value of the dispersion of the produced particles, the concentration of the produced particles in the dispersion of the produced particles, and the supply amounts of the metals derived from the metal salts without requiring an expensive apparatus such as the particle size distribution measuring apparatus.

(Second Aspect)

The method according to the first aspect, characterized in that

in the step of creating the correlation equation,
the plurality of kinds of metal salts are three kinds of metal salts, and
when the turbidity of the dispersion of the produced particles is $X_1$ NTU, the concentration of the produced particles is $X_2$% by mass, the supply amounts of the metals are $X_3$ mol, $X_4$ mol, and $X_5$ mol, and the representative particle size of the produced particles is Y $\mu$m,
the correlation equation is determined by obtaining coefficients a, b, c, d, and e by a least squares method in the following equation representing a relationship between Y and $X_1$, $X_2$, $X_3$, $X_4$, and $X_5$.

⊙[Mathematical Equation 1]

$$Y = aX_1 + bX_2 + cX_3/X_5 + dX_4/X_5 + e$$

(Operation and Effect)

By using the correlation equation, the representative particle size of the produced particles can be accurately acquired.

(Third Aspect)

The method according to the second aspect, characterized in that

in the step of creating the correlation equation,
the plurality of kinds of metal salts are three kinds of metal salts, and
the turbidity of the dispersion of the produced particles is $X_1$ NTU, the concentration of the produced particles is $X_2$% by mass, $X_3$ is the number of moles of cobalt ions, $X_4$ is the number of moles of manganese ions, and $X_5$ is the number of moles of nickel ions.

(Operation and Effect)

The molar ratio of the cobalt ions to the nickel ions and the molar ratio of the manganese ions to the nickel ions affect the properties of the produced particles. Since the properties of the produced particles affect the acquisition of the particle size based on the turbidity, it is possible to acquire the representative particle size with higher accuracy by incorporating the molar ratio of the cobalt ions to the nickel ions and the molar ratio of the manganese ions to the nickel ions in the correlation equation.

(Fourth Aspect)

A representative particle size acquisition system for produced particles in a crystallizer, characterized in that

aqueous solutions each containing each of a plurality of kinds of metal salts are supplied to the crystallizer and the metal salts are brought into contact with each other to produce the particles, and
the system comprises:

a turbidity acquisition unit configured to acquire a turbidity of a dispersion of the produced particles in the crystallizer;
a produced particle concentration acquisition unit configured to acquire a concentration of the produced particles in the dispersion of the produced particles;
a metal supply amount acquisition unit configured to acquire supply amounts of metals derived from the metal salts;
a correlation equation creation unit configured to store a correlation equation representing a relationship among the representative particle size of the produced particles acquired by a particle size distribution measuring apparatus, the turbidity of the dispersion of the produced particles, the concentration of the produced particles in the dispersion of the produced particles, and the supply amounts of one or two or more kinds of the metals selected from the metals derived from the metal salts; and
a representative particle size calculation unit configured to obtain the representative particle size of the produced particles by the correlation equation based on respective numerical values of the turbidity of the dispersion of the produced particles obtained by the turbidity acquisition unit, the concentration of the produced particles obtained by the produced particle concentration acquisition unit, and the supply amounts of one or two or more of the metals selected from the metals derived from the metal salts obtained by the metal supply amount acquisition unit.

(Operation and Effect)

By combining relatively inexpensive apparatuses such as the turbidity meter without requiring the particle size distribution measuring apparatus, the system for easily and quickly acquiring the representative particle size of the produced particles can be obtained.

(Fifth Aspect)

The representative particle size acquisition system according to the fourth aspect, characterized in that

the plurality of kinds of metal salts are three kinds of metal salts, and
when the turbidity of the dispersion of the produced particles is $X_1$NTU, the concentration of the produced particles is $X_2$% by mass, the supply amounts of the metals are $X_3$ mol, $X_4$ mol, and $X_5$ mol, and the representative particle size of the produced particles is Y $\mu$m,
the correlation equation creation unit obtains coefficients a, b, c, d, and e by a least squares method in the following equation representing a relationship between Y and $X_1$, $X_2$, $X_3$, $X_4$, and $X_5$ to create and store the correlation equation.

⊙[Mathematical Equation 1]

$$Y = aX_1 + bX_2 + cX_3/X_5 + dX_4/X_5 + e$$

(Operation and Effect)

By creating the correlation equation by the correlation equation creation unit, it is possible to obtain the system capable of accurately acquiring the representative particle size of the produced particles.

(Sixth Aspect)

The representative particle size acquisition system according to the fifth aspect, characterized in that $X_3$ is the number of moles of cobalt ions, $X_4$ is the number of moles of manganese ions, and $X_5$ is the number of moles of nickel ions.

(Operation and Effect)

The molar ratio of the cobalt ions to the nickel ions and the molar ratio of the manganese ions to the nickel ions affect the properties of the produced particles. Since the properties of the produced particles affect the acquisition of the particle size using the turbidity, it is possible to acquire the representative particle size with higher accuracy by incorporating the molar ratio of the cobalt ions to the nickel ions and the molar ratio of the manganese ions to the nickel ions in the correlation equation.

Advantageous Effects of Invention

According to the present invention, it is possible to acquire the particle sizes of produced particles in a crystallizer using one correlation equation from the turbidity, the concentration of the produced particles in a crystallization process. It is possible to acquire the particle sizes of the produced particles in the crystallizer from the turbidity, the concentration of the produced particles, and the supply amount of a raw material substance using one correlation equation when the produced particles are produced by the reaction of the raw material substance.

Brief Description of Drawings

FIG. 1 is a schematic view of an overall crystallizer;
FIG. 2 is a schematic view of a reactor;
FIG. 3 is a representative particle size acquisition flow;

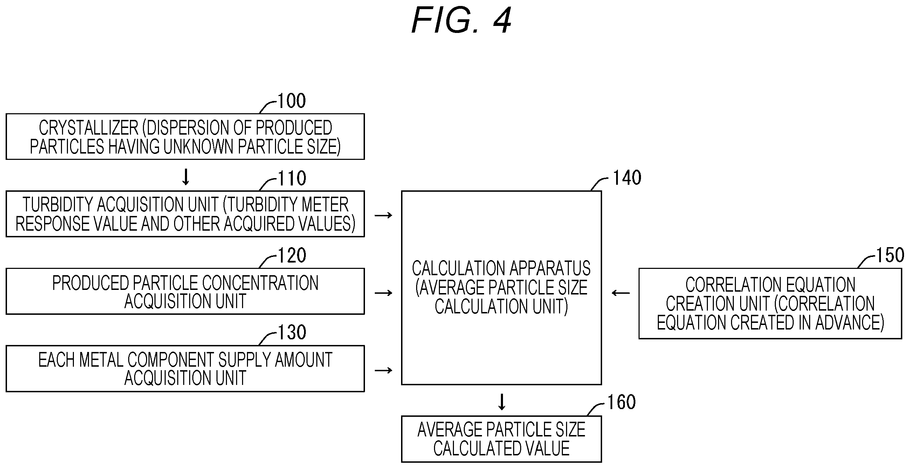

FIG. 4 is a system configuration;
FIG. 5 is a graph showing a representative particle size calculated value and measured value according to a method of Example; and
FIG. 6 is a graph showing a representative particle size calculated value and measured value according to a method of Comparative Example.

Description of Embodiments

Next, embodiments for implementing the present invention will be described. A method for acquiring the particle sizes of produced particles will be described together with an apparatus example by way of example.

(Crystallizer)

A typical example of a crystallizer according to the present invention is a reactive crystallizer for obtaining produced particles of metal particles. One of the specific examples is directed to manufacturing produced particles using transition metals such as Ni, Co, and Mn. However, since a method for performing reactive crystallization can be widely and generally applied, metals other than the transition metals or other substances may be directed.

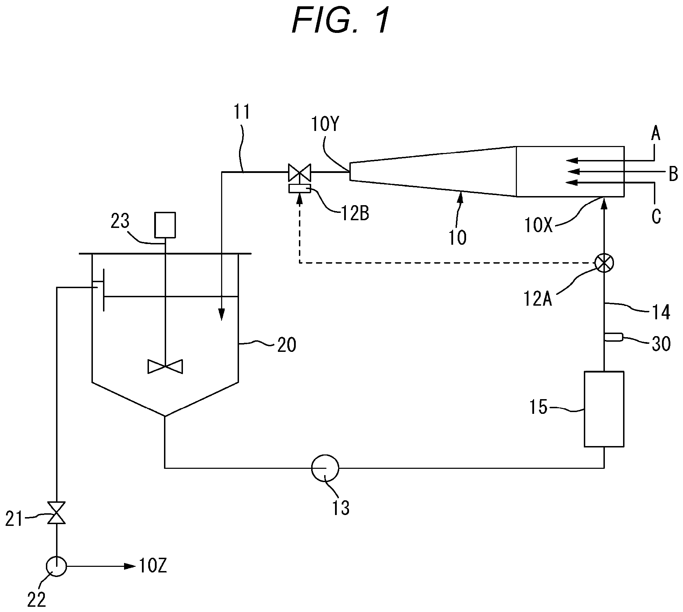

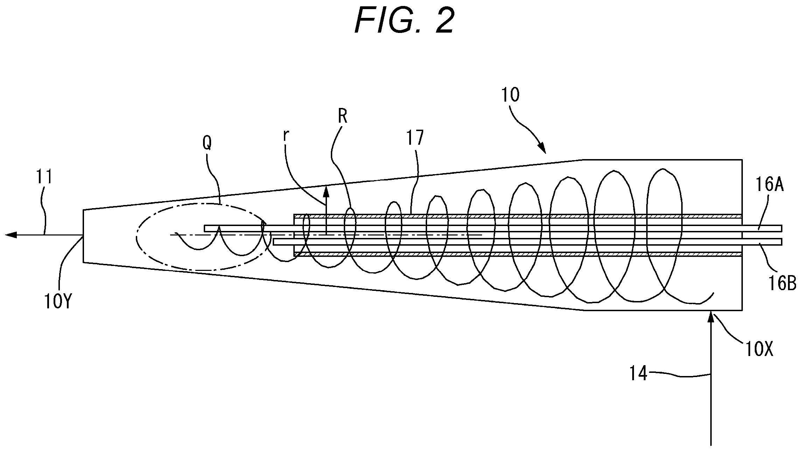

FIG. 1 shows one example of a crystallizer according to the present invention, and FIG. 2 shows one example of a reactor according to the present invention. With a liquid flow in a reactor 10 as a swirling flow, an injection liquid containing a substance to be injected is injected in the reactor 10 in the contact field of the reactor 10 to perform reaction processing. In the illustrated example, a liquid A, a liquid B, and a liquid C are injected as an injection liquid containing a metal salt to be injected, but only the liquid A and the liquid B may be injected.

In the illustrated reactor 10, a liquid is circulated through circulation paths 11 and 14 (an extraction path 11, a return path 14) by a circulation pump 13, and a returned liquid of the circulated liquid is caused to flow into the reactor 10 to produce the swirling flow. Reference numeral 15 denotes a temperature controller for heating or cooling the liquid, provided as necessary. An inflow position including an inflow port 10X of the returned liquid of the circulated liquid is at one end in the longitudinal direction of the reactor 10, and an outflow position including an outflow port 10Y of a dispersion of the produced particles after reactive crystallization is at the other end in the longitudinal direction.

The dispersion of the produced particles is guided to a temporary reservoir 20, and the dispersion of the produced particles is stabilized and the particles are caused to settle in the temporary reservoir 20. A dispersion 10Z of the finally-produced particles is transferred from the temporary reservoir 20 as an overflow liquid or by an discharge pump 22 to subsequent commercialization means (not shown). Reference numeral 21 denotes a takeout valve. Reference numeral 23 denotes an adjustment stirrer. The remaining liquid is returned to the reactor 10 through the return path 14 by the circulation pump 13.

A pressure indicator 12A is provided at an inlet portion of the reactor 10, and a pressure control valve 12B is provided at an outlet portion thereof. By reducing the valve opening degree of the pressure control valve 12B with respect to the discharge pressure of the circulation pump 13, the inside of the reactor 10 is brought into a pressurized state. The pressure in the reactor 10 is adjusted by adjusting the valve opening degree of the pressure control valve 12B based on a current pressure by the pressure indicator 12A.

The pressure in the reactor 10 is desirably 0.01 to 1.0 MPa, and particularly desirably 0.05 to 0.3 MPa, in the inlet portion of the reactor 10.

An in-line turbidity meter can be used as a turbidity meter 30 that measures the turbidity of the dispersion of the produced particles. Turbidity meters of any of a backscattering type, a side scattering type, a light transmission/scattering comparison type (integrating sphere type), and a light flux transmission type can be used, but the backscattering type is preferable when the concentration of the produced particles in the dispersion of the produced particles is high. This is because backscattering is main when the concentration is high.

The turbidity meter 30 can be installed on the side surface of the temporary reservoir 20. Alternatively, the turbidity meter 30 can also be installed in the circulation paths 11 and 14. FIG. 1 illustrates an example in which the turbidity meter 30 is installed between the reactor 10 and the temperature controller 15 in the circulation path 14, but the turbidity meter 30 may be installed between the temporary reservoir 20 and the circulation pump 13, or can be installed at other position. It is more preferable that the turbidity meter is installed in the temporary reservoir 20 or between the temporary reservoir 20 and the circulation pump 13 because particle size measurement can be more stably performed by installing the turbidity meter in a place where a crystallization reaction is not affected and the dispersion is sufficiently mixed.

The liquid flow in the reactor 10 is the swirling flow R. In particular, the flow velocity in an inner peripheral portion in the vicinity of the center of the swirl of the swirling flow R is significantly higher than an average flow velocity, and the turbulence of the flow is also large. When the injection liquids A to C containing metal salts or the like to be injected are injected at such a position, the injection liquid is rapidly diffused so as to achieve a uniform reaction.

Therefore, as shown in FIG. 2, it is desirable to prevent mutual contact between the injection liquids A to C using injection pipes 16A, 16B... until the injection liquids A to C are discharged from the tips thereof.

Furthermore, it is desirable to insert a guide pipe 17 so as to prevent an influence on the liquids from the swirling flow R.

Here, it is sufficient to inject the injection liquids A to C containing the metal salts to be injected at a center-side position with respect to the inner wall surface of the reactor 10 in the contact field in the reactor 10. However, as shown in FIG. 2, the injection position is preferably within 2/3 of a radius r from the center, and more preferably within 1/2 of the radius r.

The flow velocity in an inner peripheral portion in the vicinity of the center of the swirl of the swirling flow R is significantly higher than an average flow velocity, and the turbulence of the flow is also large. In such a position, the injection liquid is rapidly diffused so as to achieve a uniform reaction. Therefore, according to the present apparatus, particles having a uniform particle size are obtained.

(Representative Particle Size Acquisition Method)

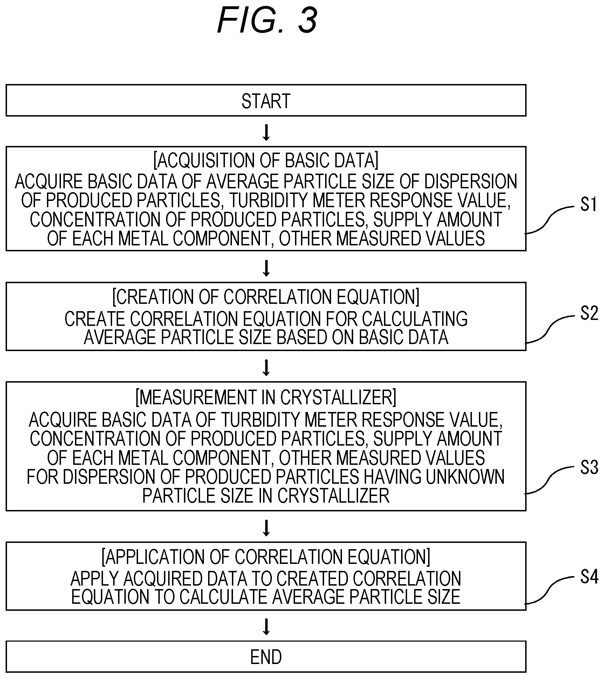

Hereinafter, a method for acquiring the particle sizes of the produced particles from data such as turbidity without directly measuring the particle sizes by a particle size distribution measuring apparatus will be described. FIG. 3 illustrates an acquisition flow of the representative particle size of the produced particles. As basic data, the representative particle size of the dispersion of the produced particles, the turbidity, the concentration of the produced particles, and the supply amount of each component are acquired (S1). In addition, for example, temperature or other measured values may be added.

The representative particle size can be measured using the particle size distribution measuring apparatus. For example, a dynamic light scattering method, a laser diffraction/scattering method, a centrifugal sedimentation method, an image analysis method, and the like can be used. When the laser diffraction/scattering method is used, a volume average particle size can be obtained, but a weight average particle size, a number average particle size, and the like can also be used.

There is also a case where a particle size corresponding to 50% by volume when integrated from the smallest particle size based on the volume is indicated by d50. In this case, a particle size corresponding to 10% by volume when integrated from the smallest particle size is expressed as d10, and a particle size corresponding to 90% by volume when integrated from the smallest particle size is expressed as d90.

The volume average particle size can also be expressed by the following equation.

[Mathematical Equation 2]

$$Y = \sum n_i r_i^4 / \sum n_i r_i^3$$

Here, Y is the volume average particle size, $r_i$ is a particle size, and $n_i$ is the number of particles having a particle size $r_i$.

The response value of the turbidity meter is expressed in units such as NTU.

The concentration of the produced particles is obtained by expressing the proportion of the produced particles in the suspension of the produced particles in the unit of % by mass.

The concentration of the produced particles is a value obtained by dividing a mass when 100% particles are produced from each injected metal salt by the mass of the dispersion of all the produced particles. For example, when nickel, cobalt, and manganese are injected at a molar ratio of 1 : 1 : 1, the concentration is calculated from the masses of the supplied metals assuming that $Ni_{1/3}CO_{1/3}Mn_{1/3}OH_2$ is produced from all the metals.

Each component is, for example, a metal ion derived from the supplied substance. In this case, the amount of each component is expressed by the mass of each supplied metal ion, and for example, expressed in the unit of g.

Next, a correlation equation for obtaining the representative particle size is created based on the obtained basic data (S2). As the correlation equation, a multivariable polynomial equation, an exponential/logarithmic equation, and the like are conceivable, but a first-order multivariable polynomial equation is preferable in consideration of the complexity of calculation. The obtained basic data is used as a variable, and for example, a multivariable linear function shown below is set. Each coefficient is determined using the least squares method based on the data of the representative particle size obtained by the particle size distribution measuring apparatus. Y is the representative particle size obtained by the particle size distribution measuring apparatus. $X_1$ is, for example, the turbidity meter response value. $X_2$ is, for example, the concentration of the produced particles. $X_3$ and $X_4$ are, for example, the supply amount of each component. Here, in the following equation, two kinds of component amounts are used as each component amount, but three or more kinds of component amounts may be used.

⊙[Mathematical Equation 3]

$$Y = aX_1 + bX_2 + cX_3 + dX_4 + e$$

Here, in the least squares method, a, b, c, d, and e are determined so as to minimize the sum of the squares of the differences between the left side and the right side of Mathematical Equation 3 for the set of ($Y$, $X_1$, $X_2$, $X_3$, $X_4$).

In this case, the color of the produced particles affects the turbidity. Therefore, when the produced particles have a color, it is preferable to add the basic data that affects the color of the produced particles as a variable.

For example, when a nickel sulfate aqueous solution is used as the liquid A, a cobalt sulfate aqueous solution is used as the liquid B, and a manganese sulfate aqueous solution is used as the liquid C, and these aqueous solutions are injected into the reactor together with caustic soda, ternary crystals of nickel, cobalt, and manganese are obtained.

In this case, the ratio of cobalt ions to nickel ions and the ratio of manganese ions to nickel ions affect the color of the produced particles. Therefore, it is preferable to take the turbidity meter response value, the concentration of the produced particles, the ratio of the cobalt ions to the supplied nickel ions, and the ratio of the manganese ions to the nickel ions as variables.

Then, the following correlation equation can be set.

⊙[Mathematical Equation 1]

$$Y = aX_1 + bX_2 + cX_3/X_5 + dX_4/X_5 + e$$

Here, Y ($\mu$m) represents the representative particle size of the produced particles, $X_1$ (NTU) represents the turbidity meter response value of the dispersion of the produced particles, $X_2$ (% by mass) represents the concentration of the produced particles, $X_3$ (mol) represents the supply amount of cobalt, $X_4$ (mol) represents the supply amount of manganese, and $X_5$ (mol) represents the supply amount of nickel.

The coefficients a, b, c, d, and e can be determined by the least squares method using the representative particle size Y obtained by the particle size distribution measuring apparatus and $X_1$, $X_2$, $X_3$, $X_4$, and $X_5$ corresponding thereto.

Next, the basic data of the representative particle size of the dispersion of the produced particles, the turbidity meter response value, the concentration of the produced particles, the each metal component supply amount, and other measured values are acquired (S3).

By using the coefficients a, b, c, d, and e, the representative particle size of the produced particles can be acquired from the representative particle size of the dispersion of the produced particles, the turbidity meter response value, the concentration of the produced particles, the ratio of the cobalt ions to the supplied nickel ions, and the ratio of the manganese ions to the nickel ions according to the correlation equation (S4).

The concentration of the produced particles is preferably 1 to 40% by mass, more preferably 1 to 15% by mass, and still more preferably 2 to 10% by mass. When the concentration is less than 1% by mass, the scattered light intensity of the particles is weakened, so that the accuracy of the correlation equation may be deteriorated. When the concentration is more than 2% by mass, the scattered light intensity of the particles is sufficient, and thus the accuracy of the correlation equation is enhanced. Meanwhile, when the concentration is more than 40% by mass, the sensitivity of the scattered light intensity comes close to the upper limit, and thus the measurement accuracy of the turbidity may be deteriorated. In this case, the accuracy of the correlation equation may be deteriorated. When the concentration is less than 15%, there is a sufficient margin in the upper limit of the sensitivity of the scattered light intensity, so that the accuracy of the correlation equation is enhanced, and when the concentration is less than 10%, the accuracy of the correlation equation is further enhanced for the same reason.

According to Mie scattering theory, it is known that the turbidity is proportional to $(1/d)^n$, where d is the particle size of the suspension. Here, n is assumed to be around 1. Therefore, when the produced particles have a wide particle size distribution and contains a large amount of particles having a particle size other than the representative particle size, that is, when the dispersion of the particle size distribution is large, the influence on the turbidity of the particles having a particle size other than the representative particle size increases, and the influence on the accuracy of the correlation equation also increases. Therefore, in order to improve the accuracy of the correlation equation, it is preferable that the particle size distribution is narrow. In the creation of the correlation equation, in d10, d50, and d90 of the produced particles acquired by the particle size distribution measuring apparatus based on the volume of the produced particles, a value of (d90-d10)/d50 is preferably 1.5 or less. When the value is more than 1.5, an error due to the influence of the particles having a particle size other than the representative particle size increases, and the accuracy of the correlation equation decreases.

The turbidity meter is preferably an in-line turbidity meter. This is because data can be sequentially acquired. The representative particle size acquisition method of the present invention can be applied to both a continuous type crystallizer and a batch type crystallizer. In the case of the batch type, in order to maintain the operation balance, the dispersion of the produced particles cannot be collected from the crystallizer until the crystallization step (crystallization section) is completed. Therefore, the representative particle size acquisition method using the in-line turbidity meter capable of acquiring the representative particle size during the operation is particularly effective in the batch type.

(Representative Particle Size Acquisition System)

Hereinafter, a representative particle size acquisition system that acquires the particle sizes of produced particles from data such as turbidity without directly measuring the particle sizes by a particle size distribution measuring apparatus will be described.

The representative particle size acquisition system includes a crystallizer 100, a turbidity acquisition unit 110 that acquires the turbidity of a dispersion of produced particles, a produced particle concentration acquisition unit 120 that acquires the concentration of the produced particles in the dispersion of the produced particles, an each component supply amount acquisition unit 130 that acquires the supply amounts of metals derived from the metal salts, a correlation equation creation unit 150 that stores a correlation equation representing a relationship between the representative particle size of the produced particles acquired by the particle size distribution measuring apparatus, the turbidity of the dispersion of the produced particles, the concentration of the produced particles in the dispersion of the produced particles, and the supply amounts of one or two or more kinds of the metals selected from the metals derived from the metal salts, and a representative particle size calculation unit 140.

The turbidity acquisition unit 110 acquires the turbidity of the suspension of the produced particles. The in-line turbidity meter can be used as the turbidity meter 30 that measures the turbidity of the dispersion of the produced particles. Turbidity meters of any of a backscattering type, a side scattering type, a light transmission/scattering comparison type (integrating sphere type), and a light flux transmission type can be used, but the backscattering type is preferable when the concentration of the produced particles in the dispersion of the produced particles is high. This is because backscattering is main when the concentration is high.

The produced particle concentration acquisition unit 120 acquires the concentration of the produced particles in the suspension of the produced particles. The produced particle concentration acquisition unit acquires the concentration of the produced particles as a value obtained by dividing the mass when 100% particles are produced from each injected metal salt by the mass of the dispersion of all the produced particles. For example, when nickel, cobalt, and manganese are injected at a molar ratio of 1 : 1 : 1, the concentration is acquired as a value calculated from the masses of the supplied metals assuming that $Ni_{1/3}CO_{1/3}Mn_{1/3}OH_2$ is produced from all the metals.

The each component supply amount acquisition unit 130 acquires the supply amounts of the metal components derived from the plurality of metal salts supplied to the crystallizer. In particular, since the properties of the particles to be produced are factors that affect the acquisition of the representative particle size in the present invention, it is important to acquire the amounts of the components that affect the properties of the particles to be produced. For example, when the metal salts to be supplied to the crystallizer are nickel sulfate, cobalt sulfate, and manganese sulfate, the amounts of supplied nickel, cobalt, and manganese are acquired.

In addition to the above, for example, other data acquisition unit that acquires data such as the internal temperature of the crystallizer may be provided.

According to the representative particle size acquisition system having these configurations, the representative particle size of the produced particles can be acquired from each data of the turbidity of the dispersion of the produced particles, the concentration of the produced particles, and the supply amounts of the metals using the correlation equation stored in the correlation equation creation unit 150 without using the particle size distribution measuring apparatus. Note that the correlation equation creation unit 150 does not need to create a correlation equation each time, and can also use a correlation equation created and stored in advance.

(Manufacturing Example)

As operating conditions, desalted water was initially charged in an apparatus, and subsequently aqueous solutions adjusted to have cobalt sulfate $X_3$mol/L, manganese sulfate $X_4$mol/L, and nickel sulfate $X_5$mol/L were reacted while the aqueous solutions were added to the reactor simultaneously with caustic soda water and ammonia water to obtain produced particles.

Here, as shown in Table 1, the operation was performed under a plurality of conditions in which $100 \times X_3/X_5$ was changed from 0 to 14.46 and $100 \times X_4/X_5$ was changed from 0 to 6.02.

The particle size distribution of the obtained produced particles was analyzed by a laser diffraction/scattering type particle size distribution measuring apparatus. As the laser diffraction/scattering type particle size distribution measuring apparatus, SALD-2300 (Shimadzu Corporation) was used. As the measurement conditions, it was confirmed that dispersion was achieved by ultrasonic irradiation using a flow cell, and measurement was performed at a refractive index suitable for the sample. In this case, the obtained representative particle size is a volume-based particle size.

The turbidity of the obtained dispersion of the produced particles was analyzed by the backscattering type turbidity meter. As the turbidity meter, NBP007 (KEMTRAK) or InPro8100/S/120 (Mettler-Toledo International Inc.) was used. As the measurement conditions, a light source wavelength of 850 nm or 880 nm was used.

A solid content concentration (%) was calculated on the assumption that all raw materials supplied to the reactor were reacted to produce a metal hydroxide. For example, in the case of $X_3 : X_4 : X_5 = 1 : 1 : 1$, the solid content concentration was calculated from the masses of supplied nickel, cobalt, and manganese assuming that $Ni_{1/3}CO_{1/3}Mn_{1/3}OH_2$ was produced from the produced particles.

(Example)

Coefficients a, b, c, d, and e were determined by a least squares method based on data in Table 1 using the following correlation equation.

⊙[Mathematical Equation 4]

$$Y = aX_1 + bX_2 + 100cX_3/X_5 + 100dX_4/X_5 + e$$

Here, Y ($\mu$m) represents the volume-based representative particle size of produced particles, $X_1$ (NTU) represents the turbidity of the dispersion of the produced particles, $X_2$ (% by mass) represents the concentration of the produced particles, $X_3$ (mol) represents the supply amount of cobalt, $X_4$ (mol) represents the supply amount of manganese, and $X_5$ (mol) represents the supply amount of nickel. Here, as the volume-based representative particle size, d50 was used. Here, the unit of $X_1$ is NTU, but as long as the measurement principle of a turbidity meter is suitable, any turbidity unit (for example, Nephelo, EBC, and the like) or turbidity meter response value can be used for turbidity.

In Table 1, an A component ratio (%) represents $100 \times X_3/X_5$, and a B component ratio (%) represents $100 \times X_4/X_5$.

a = -0.0213, b = 0.678, c = -0.302, d = 0.851, and e = 7.65 were obtained.

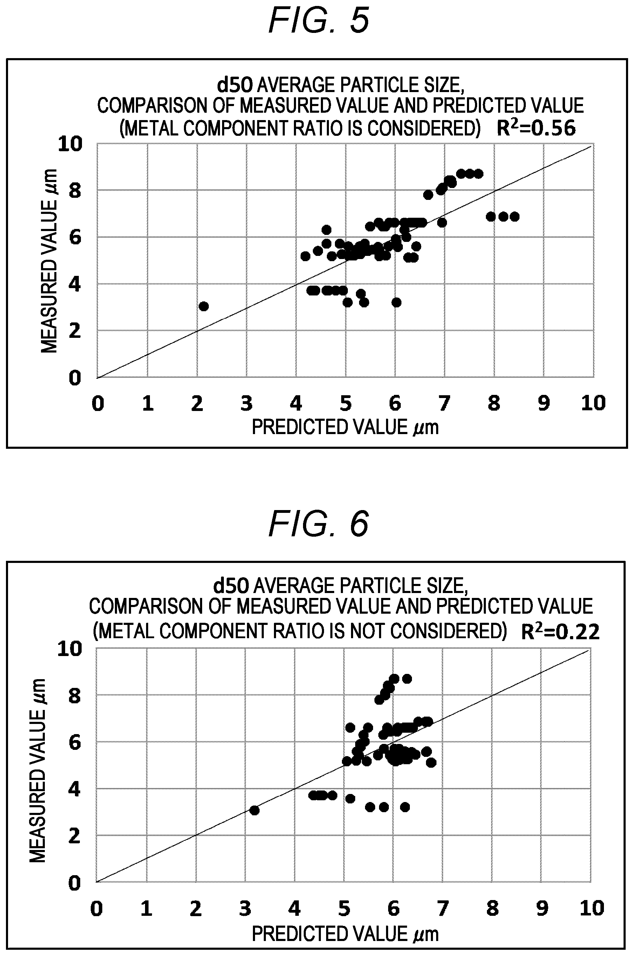

A calculated value (predicted value) calculated using the correlation equation of a d50 particle size obtained from the data of Table 1 based on this correlation equation is shown in Table 1. FIG. 5 shows a plot of the measured value of the d50 particle size measured by a particle size distribution meter and the calculated value calculated using the correlation equation. A determination coefficient $R^2$ was 0.56.

(Comparative Example)

Without considering the supply amount of $X_3$ (mol) cobalt, the supply amount of $X_4$ (mol) manganese, and the supply amount of $X_5$ (mol) nickel, a, b, and e were determined by a least square method using the following equation. $X_1$ (NTU) represents the turbidity of the dispersion of produced particles, and $X_2$ (% by mass) represents the concentration of the produced particles.

⊙[Mathematical Equation 5]

$$Y = aX_1 + bX_2 + e$$

a = -0.0115, b = 0.332, and e = 7.63 were obtained.

FIG. 6 is a plot of the measured value of the d50 particle size measured by a particle size distribution meter and the calculated value (predicted value) calculated using the correlation equation based on the values of a, b, and e. A determination coefficient $R^2$ was 0.22.

When the correlation equation according to the present invention is used, the determination coefficient $R^2$ of the correlation between the measured value and the calculated value of the d50 particle size is 0.56, and the determination coefficient $R^2$ when the supplied metal amount is not taken into consideration is 0.22, indicating the effectiveness of the present invention.

Industrial Applicability

In the present invention, it is possible to obtain a method for acquiring the particle size of the produced particles in the crystallizer using one correlation equation from the measured turbidity, the concentration of the produced particles, and the supply amount of the raw material substance in the crystallization process, and it is possible to easily and quickly predict the representative particle size without using an expensive particle size distribution measuring apparatus.

⊙[Table 1]

EP 4 736 976 A1

| No. | Turbidity meter response value [NTU] | Concentration of slurry [%] | A component ratio [%] | B component ratio [%] | Measured value of d50 particle size [μm] | Predicted value of d50 particle size [μm] (component ratio is considered) | Predicted value of d50 particle size [μm] (component ratio is not considered) |
|---|---|---|---|---|---|---|---|
| 1 | 317 | 3.49 | 0.52 | 2.58 | 3.6 | 5.3 | 5.1 |
| 2 | 316 | 5.47 | 0.00 | 0.00 | 6.3 | 4.6 | 5.8 |
| 3 | 435 | 5.31 | 0.80 | 3.02 | 3.7 | 4.3 | 4.4 |
| 4 | 546 | 5.58 | 0.80 | 3.02 | 3.0 | 2.2 | 3.2 |
| 5 | 297 | 6.28 | 14.46 | 6.02 | 6.6 | 6.3 | 6.3 |
| 6 | 212 | 3.10 | 14.46 | 6.02 | 6.6 | 6.0 | 6.2 |
| 7 | 358 | 3.82 | 0.80 | 3.02 | 3.7 | 5.0 | 4.8 |
| 8 | 405 | 4.89 | 0.80 | 3.02 | 3.7 | 4.7 | 4.6 |
| 9 | 447 | 5.80 | 0.80 | 3.02 | 3.7 | 4.4 | 4.4 |
| 10 | 470 | 6.87 | 0.80 | 3.02 | 3.7 | 4.6 | 4.5 |
| 11 | 493 | 7.85 | 0.80 | 3.02 | 3.7 | 4.8 | 4.6 |
| 12 | 197 | 3.07 | 14.46 | 6.02 | 6.6 | 6.3 | 6.4 |
| 13 | 222 | 4.02 | 14.46 | 6.02 | 6.6 | 6.4 | 6.4 |
| 14 | 265 | 5.04 | 14.46 | 6.02 | 6.6 | 6.2 | 6.3 |
| 15 | 265 | 4.59 | 14.46 | 6.02 | 6.6 | 5.9 | 6.1 |
| 16 | 324 | 7.14 | 14.46 | 6.02 | 6.6 | 6.4 | 6.3 |
| 17 | 344 | 7.98 | 14.46 | 6.02 | 6.6 | 6.5 | 6.3 |
| 18 | 266 | 3.49 | 0.80 | 3.02 | 7.8 | 6.7 | 5.7 |
| 19 | 269 | 3.95 | 0.80 | 3.02 | 8.0 | 6.9 | 5.8 |
| 20 | 280 | 4.33 | 0.80 | 3.02 | 8.1 | 7.0 | 5.8 |
| 21 | 281 | 4.65 | 0.80 | 3.02 | 8.3 | 7.2 | 5.9 |
| 22 | 293 | 4.93 | 0.80 | 3.02 | 8.4 | 7.1 | 5.9 |
| 23 | 298 | 5.16 | 0.80 | 3.02 | 8.4 | 7.1 | 5.9 |
| 24 | 306 | 3.49 | 0.80 | 3.02 | 5.2 | 5.8 | 5.3 |
| 25 | 319 | 3.95 | 0.80 | 3.02 | 5.6 | 5.9 | 5.3 |
| 26 | 323 | 4.33 | 0.80 | 3.02 | 5.8 | 6.0 | 5.3 |
| 27 | 334 | 4.65 | 0.80 | 3.02 | 5.9 | 6.0 | 5.3 |
| 28 | 337 | 5.05 | 0.80 | 3.02 | 6.0 | 6.2 | 5.4 |
| 29 | 342 | 5.16 | 0.80 | 3.02 | 6.3 | 6.2 | 5.4 |
| 30 | 203 | 3.00 | 0.80 | 3.02 | 8.7 | 7.7 | 6.3 |
| 31 | 238 | 3.00 | 0.80 | 3.02 | 6.6 | 7.0 | 5.9 |
| 32 | 220 | 3.00 | 14.46 | 6.02 | 6.4 | 5.8 | 6.1 |
| 33 | 207 | 3.00 | 14.46 | 6.02 | 3.2 | 6.0 | 6.2 |
| 34 | 234 | 3.00 | 14.46 | 6.02 | 5.4 | 5.5 | 5.9 |
| 35 | 223 | 3.00 | 14.46 | 6.02 | 5.2 | 5.7 | 6.1 |
| 36 | 165 | 3.00 | 0.52 | 2.58 | 6.9 | 8.2 | 6.7 |
| 37 | 160 | 3.00 | 0.00 | 0.00 | 5.1 | 6.3 | 6.8 |
| 38 | 170 | 3.00 | 0.00 | 0.00 | 5.6 | 6.1 | 6.7 |
| 39 | 187 | 3.00 | 0.00 | 0.00 | 5.5 | 5.7 | 6.5 |
| 40 | 206 | 3.00 | 0.00 | 0.00 | 5.6 | 5.3 | 6.3 |
| 41 | 217 | 3.00 | 0.00 | 0.00 | 5.2 | 5.1 | 6.1 |
| 42 | 206 | 3.00 | 0.00 | 0.00 | 5.3 | 5.3 | 6.3 |
| 43 | 225 | 3.00 | 0.00 | 0.00 | 5.7 | 4.9 | 6.0 |
| 44 | 283 | 5.00 | 0.80 | 3.02 | 8.7 | 7.3 | 6.0 |
| 45 | 361 | 5.00 | 0.80 | 3.02 | 6.6 | 5.7 | 5.1 |
| 46 | 295 | 5.00 | 14.46 | 6.02 | 6.4 | 5.5 | 5.9 |
| 47 | 301 | 5.00 | 14.46 | 6.02 | 3.2 | 5.4 | 5.8 |
| 48 | 345 | 5.00 | 14.46 | 6.02 | 5.4 | 4.5 | 5.3 |
| 49 | 332 | 5.00 | 14.46 | 6.02 | 5.2 | 4.7 | 5.5 |
| 50 | 241 | 5.00 | 0.52 | 2.58 | 6.9 | 7.9 | 6.5 |
| 51 | 219 | 5.00 | 0.00 | 0.00 | 5.1 | 6.4 | 6.8 |
| 52 | 252 | 5.00 | 0.00 | 0.00 | 5.6 | 5.7 | 6.4 |
| 53 | 273 | 5.00 | 0.00 | 0.00 | 5.5 | 5.2 | 6.1 |
| 54 | 281 | 5.00 | 0.00 | 0.00 | 5.6 | 5.1 | 6.1 |
| 55 | 275 | 5.00 | 0.00 | 0.00 | 5.2 | 5.2 | 6.1 |
| 56 | 287 | 5.00 | 0.00 | 0.00 | 5.3 | 4.9 | 6.0 |
| 57 | 301 | 5.00 | 0.00 | 0.00 | 5.7 | 4.6 | 5.8 |
| 58 | 370 | 8.00 | 0.80 | 3.02 | 8.7 | 7.5 | 6.0 |
| 59 | 415 | 8.00 | 0.80 | 3.02 | 6.6 | 6.6 | 5.5 |
| 60 | 377 | 8.00 | 14.46 | 6.02 | 6.4 | 5.8 | 5.9 |
| 61 | 413 | 8.00 | 14.46 | 6.02 | 3.2 | 5.1 | 5.5 |
| 62 | 398 | 8.00 | 14.46 | 6.02 | 5.4 | 5.4 | 5.7 |
| 63 | 453 | 8.00 | 14.46 | 6.02 | 5.2 | 4.2 | 5.1 |
| 64 | 314 | 8.00 | 0.52 | 2.58 | 6.9 | 8.4 | 6.7 |
| 65 | 353 | 8.00 | 0.00 | 0.00 | 5.5 | 5.6 | 6.2 |
| 66 | 312 | 8.00 | 0.00 | 0.00 | 5.6 | 6.4 | 6.4 |
| 67 | 372 | 8.00 | 0.00 | 0.00 | 5.2 | 5.2 | 6.0 |
| 68 | 347 | 8.00 | 0.00 | 0.00 | 5.3 | 5.7 | 6.3 |
| 69 | 361 | 8.00 | 0.00 | 0.00 | 5.7 | 5.4 | 6.1 |

11

Reference Signs List

10 Reactor
10X Inflow port
10Y Outflow port
10Z Dispersion of finally-produced particles
11, 14 Circulation path
12A Pressure indicator
12B Pressure control valve
13 Circulation pump
16A, 16B Injection pipe
17 Guide pipe
20 Reservoir
22 Discharge pump
30 Turbidity meter
A, B, C Injection liquid

**Claims**

1. A method for obtaining a representative particle size of produced particles in a crystallizer (100), **characterized in that**

   the representative particle size of the produced particles is obtained in a crystallization step of supplying aqueous solutions each containing each of a plurality of kinds of metal salts to the crystallizer (100) and bringing the metal salts into contact with each other to produce the particles, and
   the method comprises the steps of:

   acquiring basic data of the representative particle size of the produced particles acquired by a particle size distribution measuring apparatus, a turbidity of a dispersion of the produced particles, a concentration of the produced particles in the dispersion of the produced particles, and supply amounts of metals derived from the metal salts;
   creating a correlation equation representing a relationship among the representative particle size of the produced particles, the turbidity of the dispersion of the produced particles, the concentration of the produced particles in the dispersion of the produced particles, and the supply amounts of one or two or more kinds of the metals selected from the metals, obtained in the step of acquiring the basic data;
   acquiring the turbidity of the dispersion of the produced particles, the concentration of the produced particles, and the supply amounts of the metals derived from the plurality of kinds of metal salts in the crystallization step; and
   acquiring the representative particle size of the produced particles by the correlation equation based on respective numerical values of the turbidity of the dispersion of the produced particles obtained in the crystallization step, the concentration of the produced particles, and the supply amounts of one or two or more of the metals selected from the metals derived from the metal salts.

2. The method for obtaining a representative particle size of produced particles in a crystallizer (100) according to claim 1, **characterized in that**

   in the step of creating the correlation equation,
   the plurality of kinds of metal salts are three kinds of metal salts, and
   when the turbidity of the dispersion of the produced particles is $X_1$ NTU, the concentration of the produced particles is $X_2$% by mass, the supply amounts of the metals are $X_3$ mol, $X_4$ mol, and $X_5$ mol, and the representative particle size of the produced particles is Y $\mu$m,
   the correlation equation is determined by obtaining coefficients a, b, c, d, and e by a least squares method in the following equation representing a relationship between Y and $X_1$, $X_2$, $X_3$, $X_4$, and $X_5$.

⊙[Mathematical Equation 1]

$$Y = aX_1 + bX_2 + cX_3/X_5 + dX_4/X_5 + e$$

3. The method for obtaining a representative particle size of produced particles in a crystallizer (100) according to claim 2, **characterized in that**

> in the step of creating the correlation equation,
> the plurality of kinds of metal salts are three kinds of metal salts, and
> the turbidity of the dispersion of the produced particles is $X_1$NTU, the concentration of the produced particles is $X_2$% by mass, $X_3$ is the number of moles of cobalt ions, $X_4$ is the number of moles of manganese ions, and $X_5$ is the number of moles of nickel ions.

4. The method for obtaining a representative particle size of produced particles in a crystallizer (100) according to any one of claims 1 to 3, **characterized in that** the concentration of the produced particles is 1 to 40% by mass.

5. The method for obtaining a representative particle size of produced particles in a crystallizer (100) according to any one of claims 1 to 3, **characterized in that** the turbidity is obtained by measurement with a turbidity meter installed in-line in the crystallizer (100).

6. The method for obtaining a representative particle size of produced particles in a crystallizer (100) according to any one of claims 1 to 3, **characterized in that**

> in d10, d50, and d90 of the produced particles acquired by the particle size distribution measuring apparatus based on a volume of the produced particles in the creation of the correlation equation,
> a value of (d90-d10)/d50 is 1.5 or less.

7. The method for obtaining a representative particle size of produced particles in a crystallizer (100) according to any one of claims 1 to 3, **characterized in that** the crystallization step of obtaining the produced particles is a batch type or a continuous type.

8. A representative particle size acquisition system for produced particles in a crystallizer (100), **characterized in that** aqueous solutions each containing each of a plurality of kinds of metal salts are supplied to the crystallizer (100) and the metal salts are brought into contact with each other to produce the particles, and
the system comprises:

> a turbidity acquisition unit (110) configured to acquire a turbidity of a dispersion of the produced particles in the crystallizer (100);
> a produced particle concentration acquisition unit (120) configured to acquire a concentration of the produced particles in the dispersion of the produced particles;
> a metal supply amount acquisition unit (130) configured to acquire supply amounts of metals derived from the metal salts;
> a correlation equation creation unit (150) configured to store a correlation equation representing a relationship among the representative particle size of the produced particles acquired by a particle size distribution measuring apparatus, the turbidity of the dispersion of the produced particles, the concentration of the produced particles in the dispersion of the produced particles, and the supply amounts of one or two or more kinds of the metals selected from the metals derived from the metal salts; and
> a representative particle size calculation unit (140) configured to obtain the representative particle size of the produced particles by the correlation equation based on respective numerical values of the turbidity of the dispersion of the produced particles obtained by the turbidity acquisition unit (110), the concentration of the produced particles obtained by the produced particle concentration acquisition unit (120), and the supply amounts of one or two or more of the metals selected from the metals derived from the metal salts obtained by the metal supply amount acquisition unit (130).

9. The representative particle size acquisition system for produced particles in a crystallizer (100) according to claim 8, **characterized in that**

the plurality of kinds of metal salts are three kinds of metal salts, and

when the turbidity of the dispersion of the produced particles is $X_1$NTU, the concentration of the produced particles is $X_2$% by mass, the supply amounts of the metals are $X_3$ mol, $X_4$ mol, and $X_5$ mol, and the representative particle size of the produced particles is Y $\mu$m,

the correlation equation creation unit (150) obtains coefficients a, b, c, d, and e by a least squares method in the following equation representing a relationship between Y and $X_1$, $X_2$, $X_3$, $X_4$, and $X_5$ to create and store the correlation equation.

⊙[Mathematical Equation 1]

$$Y = aX_1 + bX_2 + cX_3/X_5 + dX_4/X_5 + e$$

10. The representative particle size acquisition system for produced particles in a crystallizer (100) according to claim 9, **characterized in that** $X_3$ is the number of moles of cobalt ions, $X_4$ is the number of moles of manganese ions, and $X_5$ is the number of moles of nickel ions.

# FIG. 1

FIG. 2

# FIG. 3

```
┌─────────────────────────────────────────────────────────────────┐
│                            START                                  │
└─────────────────────────────────────────────────────────────────┘
                                ↓
┌─────────────────────────────────────────────────────────────────┐
│                   [ACQUISITION OF BASIC DATA]                     │
│   ACQUIRE BASIC DATA OF AVERAGE PARTICLE SIZE OF DISPERSION        │
│    OF PRODUCED PARTICLES, TURBIDITY METER RESPONSE VALUE,          │    S1
│   CONCENTRATION OF PRODUCED PARTICLES, SUPPLY AMOUNT               │
│      OF EACH METAL COMPONENT, OTHER MEASURED VALUES                │
└─────────────────────────────────────────────────────────────────┘
                                ↓
┌─────────────────────────────────────────────────────────────────┐
│                 [CREATION OF CORRELATION EQUATION]                │
│          CREATE CORRELATION EQUATION FOR CALCULATING              │    S2
│         AVERAGE PARTICLE SIZE BASED ON BASIC DATA                 │
└─────────────────────────────────────────────────────────────────┘
                                ↓
┌─────────────────────────────────────────────────────────────────┐
│                  [MEASUREMENT IN CRYSTALLIZER]                    │
│   ACQUIRE BASIC DATA OF TURBIDITY METER RESPONSE VALUE,           │
│   CONCENTRATION OF PRODUCED PARTICLES, SUPPLY AMOUNT              │
│      OF EACH METAL COMPONENT, OTHER MEASURED VALUES               │    S3
│   FOR DISPERSION OF PRODUCED PARTICLES HAVING UNKNOWN             │
│            PARTICLE SIZE IN CRYSTALLIZER                          │
└─────────────────────────────────────────────────────────────────┘
                                ↓
┌─────────────────────────────────────────────────────────────────┐
│               [APPLICATION OF CORRELATION EQUATION]              │
│        APPLY ACQUIRED DATA TO CREATED CORRELATION                │    S4
│      EQUATION TO CALCULATE AVERAGE PARTICLE SIZE                 │
└─────────────────────────────────────────────────────────────────┘
                                ↓
┌─────────────────────────────────────────────────────────────────┐
│                            END                                    │
└─────────────────────────────────────────────────────────────────┘
```

## FIG. 4

```
CRYSTALLIZER (DISPERSION OF PRODUCED          ⌐100
PARTICLES HAVING UNKNOWN PARTICLE SIZE)
                    ↓
TURBIDITY ACQUISITION UNIT (TURBIDITY METER   ⌐110
RESPONSE VALUE AND OTHER ACQUIRED VALUES)

PRODUCED PARTICLE CONCENTRATION              ⌐120
ACQUISITION UNIT

EACH METAL COMPONENT SUPPLY AMOUNT           ⌐130
ACQUISITION UNIT
```

CALCULATION APPARATUS (AVERAGE PARTICLE SIZE CALCULATION UNIT) — 140

CORRELATION EQUATION CREATION UNIT (CORRELATION EQUATION CREATED IN ADVANCE) — 150

AVERAGE PARTICLE SIZE CALCULATED VALUE — 160

EP 4 736 976 A1

## FIG. 5

d50 AVERAGE PARTICLE SIZE,
COMPARISON OF MEASURED VALUE AND PREDICTED VALUE
(METAL COMPONENT RATIO IS CONSIDERED)   $R^2=0.56$

## FIG. 6

d50 AVERAGE PARTICLE SIZE,
COMPARISON OF MEASURED VALUE AND PREDICTED VALUE
(METAL COMPONENT RATIO IS NOT CONSIDERED)   $R^2=0.22$

# EUROPEAN SEARCH REPORT

**Application Number**

EP 25 19 9318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOUGIN PATRICIA ET AL: "Characterization of particle size and its distribution during the crystallization of organic fine chemical products as measured in situ using ultrasonic attenuation spectroscopy", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 109, no. 1, 1 January 2001 (2001-01-01), pages 274-282, XP012002089, ISSN: 0001-4966, DOI: 10.1121/1.1331113 * figures 2, 3 * | 1-10 | INV. B01D9/00 B01D9/02 G01N15/02 G01N15/06 |
| A | CN 114 544 444 A (SHANGHAI SCIENCE UNIV) 27 May 2022 (2022-05-27) * claims 1-7; figures 1-2 * | 1-10 | |
| A | WO 2013/113805 A1 (OMYA DEVELOPMENT AG [CH]) 8 August 2013 (2013-08-08) * examples 1-4 * | 1-10 | TECHNICAL FIELDS SEARCHED (IPC) B01D G01N |
| A | BROWN C M ET AL: "Nucleation of calcium oxalate monohydrate: use of turbidity measurements and computer-assisted simulations in characterizing early events in crystal formation", JOURNAL OF CRYSTAL GROWTH, ELSEVIER, AMSTERDAM, NL, vol. 108, no. 3-4, 1 February 1991 (1991-02-01), pages 455-464, XP024430298, ISSN: 0022-0248, DOI: 10.1016/0022-0248(91)90222-Q [retrieved on 1991-02-01] * the whole document * | 1-10 | |

-/--

The present search report has been drawn up for all claims

| Place of search | Date of completion of the search | Examiner |
|---|---|---|
| Munich | 22 January 2026 | García Alonso, Nuria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

page 1 of 2

**EUROPEAN SEARCH REPORT**

Application Number

EP 25 19 9318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 110 243 825 A (UNIV QINGDAO SCIENCE & TECHNOLOGY) 17 September 2019 (2019-09-17) * claims 1-7; figure 1 * ----- | 1-10 | |

TECHNICAL FIELDS
SEARCHED        (IPC)

The present search report has been drawn up for all claims

| Place of search | Date of completion of the search | Examiner |
|---|---|---|
| Munich | 22 January 2026 | García Alonso, Nuria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 9318

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2026

| Patent document cited in search report | | Publication date | Patent family member(s) | | Publication date |
|---|---|---|---|---|---|
| CN 114544444 | A | 27-05-2022 | NONE | | |
| WO 2013113805 | A1 | 08-08-2013 | AU | 2013214263 A1 | 10-07-2014 |
| | | | BR | 112014017501 A2 | 13-06-2017 |
| | | | CA | 2859585 A1 | 08-08-2013 |
| | | | CL | 2014001941 A1 | 07-11-2014 |
| | | | CN | 104080740 A | 01-10-2014 |
| | | | CR | 20140300 A | 14-10-2014 |
| | | | CY | 1117849 T1 | 17-05-2017 |
| | | | EA | 201491458 A1 | 28-11-2014 |
| | | | EP | 2623467 A1 | 07-08-2013 |
| | | | EP | 2809618 A1 | 10-12-2014 |
| | | | ES | 2584602 T3 | 28-09-2016 |
| | | | HK | 1187886 A1 | 17-04-2014 |
| | | | HK | 1204600 A1 | 27-11-2015 |
| | | | HR | P20160888 T1 | 07-10-2016 |
| | | | HU | E030141 T2 | 28-04-2017 |
| | | | JO | 3241 B1 | 08-03-2018 |
| | | | JP | 5906329 B2 | 20-04-2016 |
| | | | JP | 2015513443 A | 14-05-2015 |
| | | | KR | 20140112536 A | 23-09-2014 |
| | | | MA | 35915 B1 | 01-12-2014 |
| | | | MY | 172386 A | 22-11-2019 |
| | | | PE | 20141365 A1 | 16-10-2014 |
| | | | PH | 12014501400 A1 | 08-10-2014 |
| | | | PL | 2623467 T3 | 31-01-2017 |
| | | | PT | 2623467 T | 17-08-2016 |
| | | | SG | 11201403577Y A | 30-07-2014 |
| | | | US | 2014360940 A1 | 11-12-2014 |
| | | | US | 2017036930 A1 | 09-02-2017 |
| | | | US | 2017081208 A1 | 23-03-2017 |
| | | | WO | 2013113805 A1 | 08-08-2013 |
| CN 110243825 | A | 17-09-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008191057 A